# EUROPEAN PATENT APPLICATION

(11) **EP 3 733 989 A1**
(43) Date of publication of application: **04.11.2020**
(21) Application number: 18894647.9
(22) Date of filing: 10.12.2018
(51) Int. Cl.: E04B 1/76, C03C 27/06, E06B 3/40, E06B 3/67

(54) **STRUCTURE AND COMPOSITE STRUCTURE**

(30) Priority: 26.12.2017 JP 2017248814
(71) Applicant: Yazaki Energy System Corporation, Minato-ku, Tokyo 108-8333 (JP)
(72) Inventor: NAKAMURA Takuju, Tokyo 108-0075 (JP)
(74) Representative: Grünecker Patent- und Rechtsanwälte PartG mbB
(86) International application number: PCT/JP2018/045316
(87) International publication number: WO 2019/131085

(57) **Abstract**

Provided are a structure and composite structure which enable use of outdoor temperature without the need of electrical energy while preventing the inflow and outflow of moisture. This window body (1) comprises: two plate materials (10) which form a space interposed therebetween; liquid HF sealed between the two plate materials (10); and slopes (30) each having a liquid circulation structure which forms a reservoir section Res for operating liquid HF on the side of one (10a) of the two plate materials (10), and in which operating liquid HF in the reservoir section Res is evaporated by heat on the side of the one of the plate materials (10a), reaches the side of the other plate material (10b), is condensed on the side of the other plate material (10b), and is returned to the reservoir section Res.

## Description

### TECHNICAL FIELD

The present invention relates to a structure body and a composite structure body.

### BACKGROUND ART

In the related art, high airtightness and high heat insulation of buildings have been pursued to improve the air conditioning efficiency of the room. In order to make such buildings highly airtight and highly heat-insulated, what is called vacuum pair glass has been developed. The vacuum pair glass is a window glass which is vacuum-insulated by setting a vacuum state of about 1/1000 atm. between a plurality of layers of glass.

Such a vacuum pair glass has an old concept but a vacuum sealing technology that can be used for a long time has been finally developed in recent years and is being commercialized by each company. These vacuum pair glasses have high heat-insulating properties and contribute to a reduction in air conditioning demand.

However, in an actual environment, the outside air temperature may be more comfortable than the room temperature, and in such a case, the demand for the air conditioning of the vacuum pair glass is rather increased. For this reason, there is a need for a technique called an outside air-cooling system or a new wind device for introducing outside air into the room.

However, when the outside air is introduced in summer, for example, when the outside air temperature is lower than the room temperature, moisture is also taken in, and as a result, the demand for the air conditioning including the latent heat hardly decreases.

To cope with such a problem, there has been proposed a window including a hydraulic fluid between depressurized double glasses, and a hydraulic fluid heating portion or a hydraulic fluid cooling portion for heating or cooling the hydraulic fluid (see Patent literature 1). According to the window, the pressure between the double glasses is reduced, and therefore, in addition to exhibiting high heat insulation, the room can be made comfortable without allowing moisture to flow in or out by heating or cooling the hydraulic fluid between the double glasses.

### Citation List

### Patent Literature

[Patent Document 1] JP-A-2006-336233

### SUMMARY OF INVENTION

### Technical Problem

However, the window described in Patent Literature 1 needs to heat or cool the hydraulic fluid, which requires electric energy, which is the same as operating an indoor air conditioner. Therefore, there is a need for a vacuum pair glass that can use the outdoor air temperature without requiring electric energy and without allowing moisture to flow in and out.

This problem is not limited to vacuum pair glass. In other words, it is highly preferable if the outside wall material and the like can use the outdoor air temperature without requiring electric energy and without allowing moisture to flow in and out.

The present invention has been made to solve such a problem, and an object thereof is to provide a structure body and a composite structure body that can use outdoor air temperature without requiring electric energy and allowing moisture to flow in and out.

### Solution to Problem

The structure body according to the present invention includes two sheets of plate members, a liquid, and a slope, and the liquid is sealed and the slope is installed in the space between the two sheets of plate members. The slope forms a liquid reservoir on one plate member side of the two sheets of plate members. The slope has a liquid circulation structure in which the liquid in the reservoir evaporated by the heat of one plate member side reaches the other plate member and the liquid condensed in the other plate member returns to the reservoir again.

### Advantageous Effects of Invention

According to the present invention, there is provided a slope having a liquid circulation structure in which the liquid in the reservoir evaporated by the heat of the one plate member side reaches the other plate member side and the liquid condensed on the other plate member returns to the reservoir again. For this reason, in an environment in which the liquid evaporates due to heat from the one plate member side, the heat of evaporation is taken away from the one plate member side to be cooled. On the other hand, when the evaporated liquid reaches the other plate member side, the evaporated liquid is cooled and condensed and liquefied by the other plate member, and the heat of condensation is discarded from the other plate member side. Therefore, as a result, the heat of the one plate member side flows through to the other plate member side. Accordingly, for example, in summer, the indoor side becomes the one plate member, and the room can be made comfortable without taking in moisture. Since the condensed and liquefied liquid returns to the reservoir by the slope, the above heat transmission can be continuously performed without requiring electric energy. Therefore, the outdoor air temperature can be used without requiring electric energy and without allowing moisture to flow in and out.

### BRIEF DESCRIPTION OF DRAWINGS

Fig. 1 is a cross-sectional view illustrating a structure body according to a first embodiment of the present invention.
Fig. 2 is a perspective view illustrating details of a slope illustrated in Fig. 1.
Fig. 3 is a perspective view illustrating a window body according to the present embodiment.
Fig. 4 is a perspective view illustrating a reversal structure according to a modification.
Fig. 5 is a cross-sectional view illustrating a window body according to a second embodiment.
Fig. 6 is a perspective view illustrating a reversal structure according to a second modification example.
Fig. 7 is a perspective view illustrating a reversal structure according to a third modification example.
Fig. 8 is a configuration view illustrating a window body according to a third embodiment.
Fig. 9 is a configuration view illustrating a window body according to a fourth embodiment.
Figs. 10A and 10B are operation views illustrating how an operating mechanism illustrated in Fig. 9 operates, Fig. 10A illustrates a neutral state, and Fig. 10B illustrates a second state.
Fig. 11 is a configuration view illustrating a window body according to a fifth embodiment.
Fig. 12 is an operation view illustrating an operation state by the operating mechanism illustrated in Fig. 11, and illustrates a case where a slope is in the second state.
Figs. 13A and 13B are configuration views illustrating a part of a window body according to a sixth embodiment, Fig. 13A illustrates a slope in a neutral state, and Fig. 13B illustrates a slope in a first state.

### DESCRIPTION OF EMBODIMENTS

Hereinafter, the present invention will be described in preferred embodiments. The present invention is not limited to the embodiments described below and can be modified as appropriate without departing from the spirit of the present invention. In the following embodiments, some components are not illustrated or described, but as for the details of the omitted technology, it goes without saying that a known or well-known technology is appropriately applied within a range that does not cause inconsistency with the content described below.

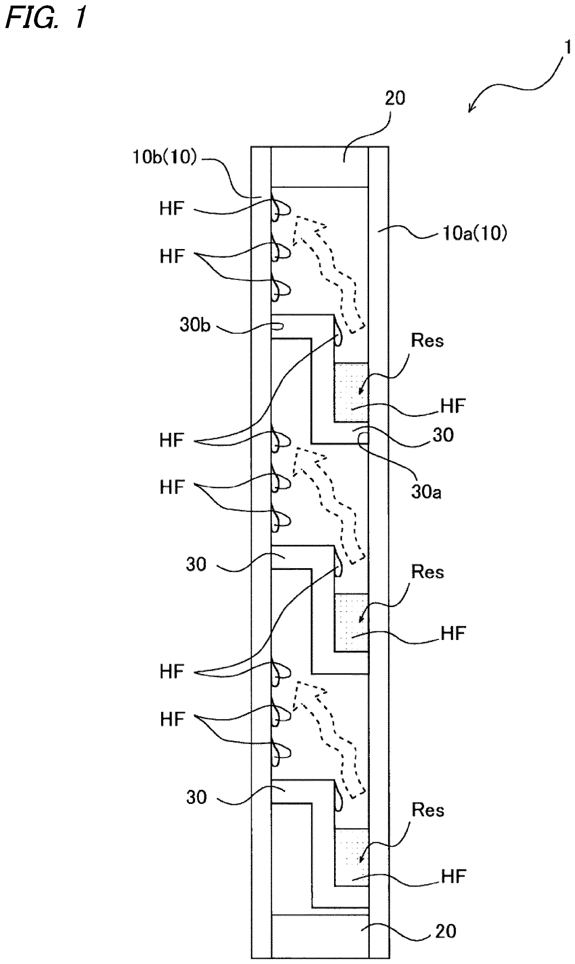

Fig. 1 is a cross-sectional view illustrating a structure body according to a first embodiment of the present invention. In Fig. 1, a window body that can be used as a window is described as an example of the structure body, but the structure body is not limited to the window body and may be applied to another member such as an outer wall member and the like.

A window body 1 according to the example illustrated in Fig. 1 generally includes two sheets of plate members 10, a vacuum sealing member 20, a slope 30, and a hydraulic fluid (liquid) HF.

The two sheets of plate members 10 are transparent plate members arranged substantially parallel to each other. These plate members 10 are made of, for example, a glass material.

The vacuum sealing member 20 is interposed between the two sheets of plate members 10 at the peripheral ends of the two sheets of plate members 10. By providing the vacuum sealing members 20 at the peripheral ends of the two sheets of plate members 10, an internal space closed by the two sheets of plate members 10 and the vacuum sealing member 20 is formed. In the present embodiment, the internal space is set in a vacuum state from the viewpoint of heat insulation, but is not limited thereto, and may be filled with a predetermined gas.

The slope 30 is a transparent member interposed between the two sheets of plate members 10 and is folded twice at 90 degrees in the cross-sectional view illustrated in Fig. 1 to be a bent body having a substantially N-shaped cross-section. The slope 30 has one end portion 30a in contact with the inner wall of one plate member 10a and the other end portion 30b in contact with the inner wall of the other plate member 10b. Such a slope 30 includes, on one end side, a reservoir Res that can store the hydraulic fluid HF together with the one plate member 10a.

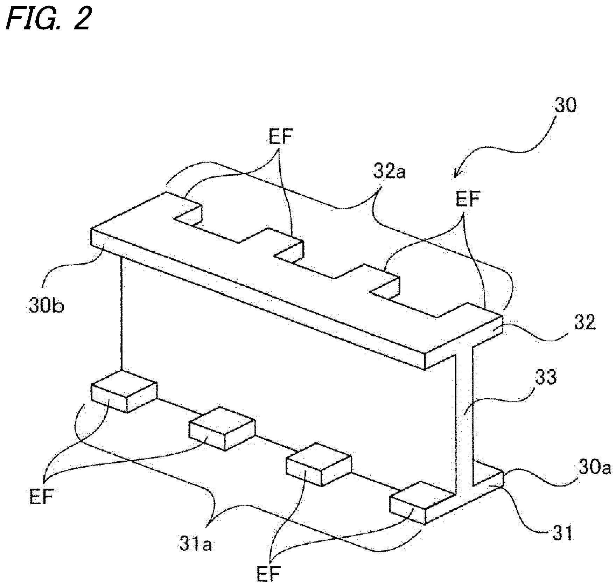

Fig. 2 is a perspective view illustrating details of the slope 30 illustrated in Fig. 1. As illustrated in Fig. 2, the slope 30 includes a lower plate 31, an upper plate 32 arranged in parallel with the lower plate 31, and a connecting plate 33 connecting therebetween.

The lower plate 31 has the above-described end portion 30a, and the opposite side of the end portion 30a is a comb-tooth portion 31a that protrudes in a comb-tooth shape. Each end face EF of the comb-tooth portion 31a is a portion that comes into contact with the inner wall of the other plate member 10b. The upper plate 32 has a point-symmetric structure with the lower plate 31 with the connecting plate 33 interposed therebetween. That is, the upper plate 32 is a comb-tooth portion 32a protruding in a comb-tooth shape on the side opposite to the end portion 30b, and each end surface EF of the comb-tooth portion 32a is a portion in contact with the inner wall of the one plate member 10a. Thus, both ends (end portion 30a and end face EF) of the lower plate 31 and both ends (end portion 30b and end face EF) of the upper plate 32 of the slope 30 are in contact with the two sheets of plate members 10, respectively. As a result, the slope 30 supports the two sheets of plate members 10 to be evacuated from the inside thereof.

Fig. 1 is referred to again. In the present embodiment, the hydraulic fluid HF is a transparent liquid such as water. The hydraulic fluid HF is not limited to water. Such a hydraulic fluid HF is stored in the reservoir Res. The hydraulic fluid HF in the reservoir Res can be evaporated by heat from the one plate member 10a. The evaporated hydraulic fluid HF becomes vapor and reaches the other plate member 10b. The hydraulic fluid HF that becomes vapor is condensed and liquefied in the other plate member 10b. The liquefied hydraulic fluid HF flows down the inner surface of the other plate member 10b and accumulates on the upper plate 32 of the slope 30 (see FIG. 2). When a certain amount or more of the hydraulic fluid HF accumulates on the upper plate 32, the hydraulic fluid HF falls into the reservoir Res from the gap between the comb-tooth portion 32a of the upper plate 32.

Specifically, when the room temperature is 20°C and the outdoor air temperature is 25°C, the vapor pressure of the water (hydraulic fluid HF) stored in the reservoir Res is about 2.4 kPa, and the inner space functions as a heat-insulating glass in a vacuum state of about 2.5/100 atm. When the room temperature rises from this state to 30°C, the evaporation of water progresses and the pressure in the internal space is about to rise to 4.3 kPa, but the evaporated water (steam) is cooled and liquefied when the evaporated water comes into contact with the other outdoor side plate member 10b and flows down the inner surface of the other plate member 10b. The water flowing down returns to the reservoir Res via the upper plate 32 of the slope 30.

Therefore, the hydraulic fluid HF returns from the reservoir Res to the reservoir Res again via the other plate member 10b, and the slope 30 has a liquid circulation structure that enables such a circulation of the hydraulic fluid HF. The one plate member 10a functions as an evaporator because the hydraulic fluid HF evaporates, and the other plate member 10b functions as a condenser because the hydraulic fluid HF condenses. Therefore, the heat of evaporation is taken away from the one plate member 10a side to be cooled, and the heat of condensation is discarded from the other plate member 10b side. As a result, the heat of the one plate member 10a side flows through to the other plate member 10b side, for example, in summer, the indoor side becomes one plate member 10a, and therefore the room can be made comfortable without taking in moisture. When the room temperature is low in summer, the hydraulic fluid HF does not evaporate and can function as a heat-insulating glass.

Here, in the present embodiment, the slope 30 forms the reservoir Res together with the one plate member 10a, but a heat transfer member may be attached to the inner surface of the one plate members 10a to form the reservoir Res with the heat transfer member. That is, the slope 30 may form the reservoir Res on the one plate member 10a side together with other members. In the present embodiment, the hydraulic fluid HF reaches the other plate member 10b and is condensed and liquefied, but the present embodiment is not limited thereto, and a heat transfer member may be attached to the inner surface of the other plate member 10b so that the hydraulic fluid HF reaches the heat transfer member and is condensed and liquefied.

The slope 30 is not limited to the structure illustrated in Fig. 2 as long as the slope 30 has a liquid circulation structure that circulates the hydraulic fluid HF, and may have a simple inclination structure (inclination structure inclined from the end portion 30a toward the end portion 30b), for example.

The one plate member 10a may be a heat-absorbing glass (glass containing a metal such as iron and the like in the glass composition) for improving the evaporation ability. At least one inner surface of the two sheets of plate members 10 may be subjected to an infrared reflection process in order to improve heat insulation during heat insulation.

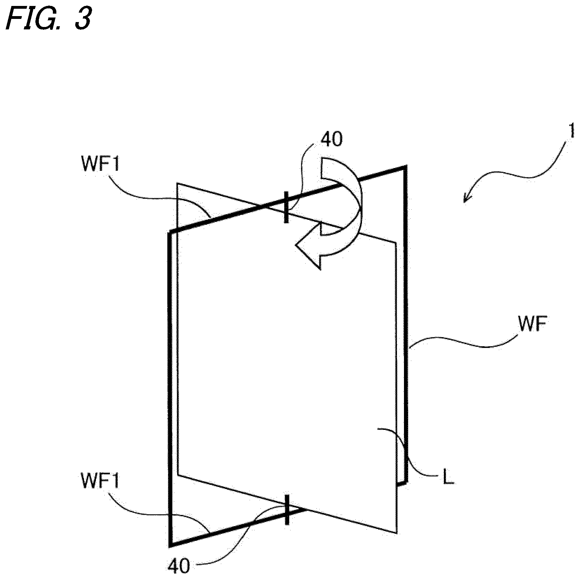

Fig. 3 is a perspective view illustrating the window 1 according to the present embodiment. As illustrated in Fig. 3, the window 1 includes a pivot (reversing mechanism) 40 in addition to the configuration illustrated in Fig. 1. The pivots 40 are rotatably provided at the central portions of upper and lower members WF1 of a rectangular window frame WF. The pivot 40 is connected to the center of the upper and lower sides of a laminate L having the two sheets of plate members 10, the vacuum sealing member 20, and the slope 30. Therefore, the laminate L can be reversed around the pivot 40, and at the time of reversing, reversing in the right-left direction (horizontal reversal) of switching the relative position between the one plate member 10a and the other plate member 10b can be performed while maintaining the vertical position of the laminate L.

After being reversed, the laminate L is locked to the window frame WF by a predetermined locking means. As a result, it is possible to obtain the window body 1 in which the direction of heat transmission is reversed. That is, by making the laminate L reversible, it is possible to switch between indoor cooling and heating.

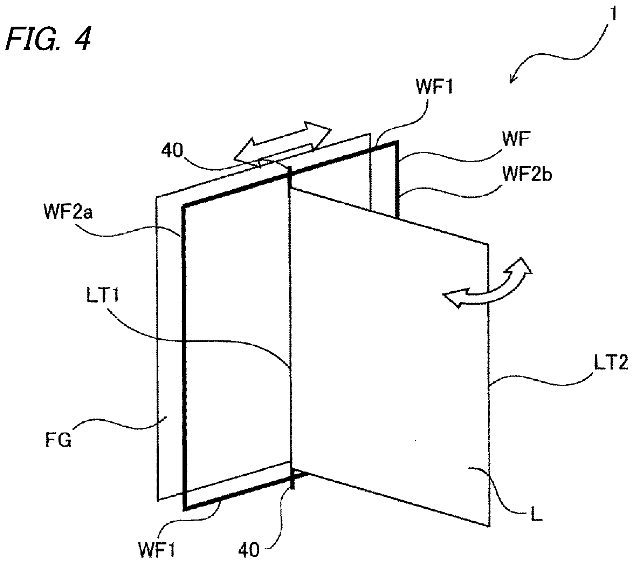

The configuration for reversing the laminate L is not limited to that illustrated in Fig. 3. Fig. 4 is a perspective view illustrating a reversal structure according to a modification example. As illustrated in Fig. 4, the window body 1 according to a modification example further includes a fixed glass FG on the outdoor side, in addition to the pivot 40 movable right and left, and can be reversed without the laminate L coming into contact with the fixed glass FG.

In the modification example, the pivot 40 is provided at one of the left and right end portions LT1 of the laminate L, and the pivot 40 is slidable with respect to the upper and lower members WF1 of the window frame WF. Therefore, the reversing operation can be performed as follows. First, it is assumed that the end portion LT1 of the laminate L on the pivot 40 side is located on one member WF2a of right and left members WF2a and WF2b of the window frame WF. When the laminate L is reversed from this state, an end portion LT2 of the laminate L on the side where the pivot 40 is not provided is pulled out into the room. Next, the end portion LT1 of the laminate L on the pivot 40 side is slid toward the other member WF2b side of the window frame WF. Thereafter, the laminate L is fitted into the window frame WF and locked by a predetermined locking means so that the end portion LT2 of the laminate L is the one member WF2a side.

As described above, even with the window 1 having the fixed glass FG on the outdoor side, the direction of heat transmission can be reversed, and the cooling and heating of the room can be switched.

Next, the operation of the window 1 according to the present embodiment will be described. First, as illustrated in FIG. 1, it is assumed that the one plate member 10a is the indoor side and the other plate member 10b is the outdoor side. Here, for example, assuming that the room temperature is 20°C and the outside air temperature is 25°C, the hydraulic fluid HF in the reservoir Res does not evaporate. However, since the internal space of the two sheets of plate members 10 is in a vacuum state, a heat-insulating effect is exhibited, and the window body 1 functions as a heat-insulating glass.

On the other hand, for example, when the room temperature is 30°C and the outside air temperature becomes 25°C, the hydraulic fluid HF in the reservoir Res evaporates. The evaporated hydraulic fluid HF reaches the other outdoor side plate member 10b, is cooled and liquefied, and flows down the inner surface of the other plate member 10b. The hydraulic fluid HF that has flowed down returns to the reservoir Res again via the upper plate 32 of the slope 30. Here, the one plate member 10a is cooled by the heat of evaporation due to the evaporation of the hydraulic fluid HF, and the heat of condensation of the hydraulic fluid HF is discarded from the other plate member 10b. Therefore, the heat of the indoor side flows through the outdoor side, and a cooling effect of cooling the room can be obtained.

When the relative position is switched while maintaining the vertical positions of the one plate member 10a and the other plate member 10b by using the pivot 40 as illustrated in Fig. 3 or Fig. 4, the above operation is reversed.

That is, when the outside air temperature rises above a predetermined temperature in winter or the like, the hydraulic fluid HF in the reservoir Res evaporates. Thus, in the same manner, as described above, the one plate member 10a on the outdoor side is cooled by the heat of evaporation due to the evaporation of the hydraulic fluid HF, and the heat of condensation of the hydraulic fluid HF is discarded from the other plate member 10b on the indoor side. Therefore, the heat outside the room flows through the room, and a heating effect of heating the room can be obtained, and at this time, the moisture in the room does not escape to the outside.

In an environment where the hydraulic fluid HF of the reservoir Res does not evaporate in winter or the like, the window body 1 functions as a heat-insulating glass as described above.

Thus, according to the window body 1 according to the first embodiment, there is provided the slope 30 having a liquid circulation structure in which the hydraulic fluid HF in the reservoir Res evaporated by the heat of the one plate member 10a reaches the other plate member 10b side and the hydraulic fluid HF condensed on the other plate member 10b returns to the reservoir Res again. Therefore, in an environment in which the hydraulic fluid HF evaporates due to heat from the one plate member 10a, the one plate member 10a loses heat of evaporation and is cooled. On the other hand, when the evaporated hydraulic fluid HF reaches the other plate member 10b side, the hydraulic fluid HF is cooled and condensed, and liquefied, and the heat of condensation is discarded from the other plate member 10b side. Therefore, as a result, the heat of the one plate member 10a side flows through to the other plate member 10b side. Accordingly, for example, in summer, the indoor side becomes the one plate member 10a, and the room can be made comfortable without taking in moisture. Since the condensed and liquefied hydraulic fluid HF returns to the reservoir Res by the slope 30, the above-described heat transmission can be continuously performed without requiring electric energy. Therefore, the outdoor air temperature can be used without requiring electric energy and without allowing moisture to flow in and out.

The two sheets of plate members 10, the hydraulic fluid HF, and the slope 30 are made of a transparent material, and thus can be used as windows.

Since the pivot 40 capable of reversing in the right-left direction is provided, which switches the relative positions while maintaining the vertical positions of the one plate member 10a and the other plate member 10b, when it is desired to change the direction of heat transmission, such as in summer and winter, daytime and nighttime, the relative positions of the one plate member 10a and the other plate member 10b can be switched to select cooling and heating.

Next, a second embodiment according to the present invention will be described. The window body according to the second embodiment is similar to that of the first embodiment, but part of the configuration is different. Hereinafter, differences from the first embodiment will be described.

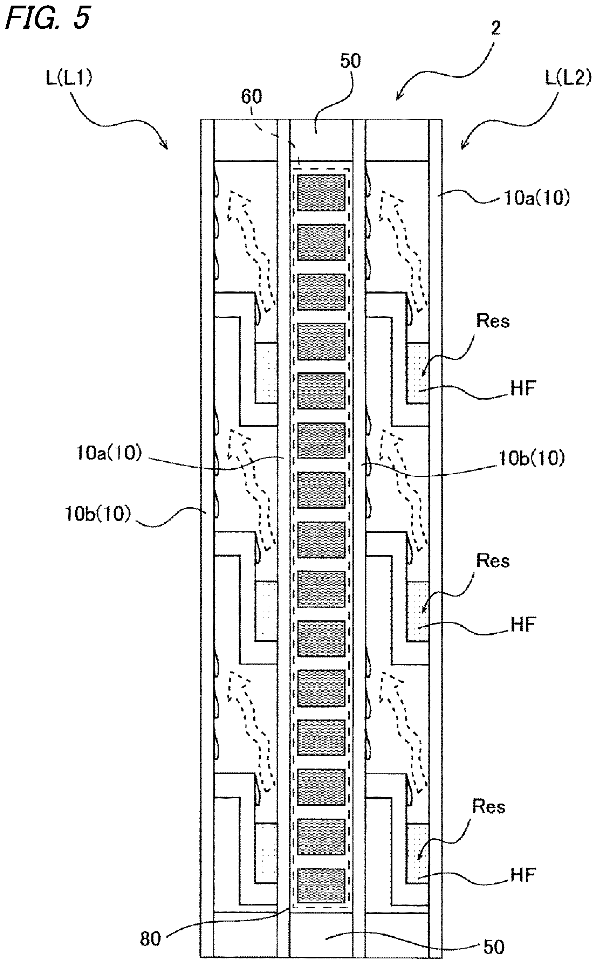

Fig. 5 is a cross-sectional view illustrating a window body according to the second embodiment. The window body (composite structure body) 2 illustrated in Fig. 5 includes two (one example of a plurality of) laminates L including the window body 1 illustrated in Fig. 1. These two laminates L are arranged to face each other with a space.

In the present embodiment, a sealing member 50 is provided between the two laminates L, and a transparent latent heat storage member 60 is provided in a space sandwiched between the two laminates L and the sealing member 50. The latent heat storage member 60 is made of, for example, a mixture of sodium sulfate and water, and is enclosed and held in the void portion of a ladder-shaped cross-section member 80 (holding plate member) sandwiched between the two laminates L. The ladder-shaped cross-section member 80 is a plate member in which void portions that become cells in the vertical direction are arranged. Instead of the ladder-shaped cross-section member 80, a honeycomb cross-section member in which void portions to be cells are arranged vertically and horizontally in a honeycomb shape may be adopted. That is, as long as the latent heat storage member 60 can be held, the latent heat storage member 60 is not limited to the above. In the present embodiment, the latent heat storage member 60 has a melting point and a freezing point at 21°C, for example.

The latent heat storage member 60 is not limited to the mixture of sodium sulfate and water and may be another member. The melting point and freezing point of the latent heat storage member 60 are not limited to 21°C and may be other temperatures. As the latent heat storage member 60, substances having different melting points and freezing points may be used. That is, the latent heat storage member 60 only needs to have a melting point and a freezing point in a specific temperature range according to the environment in which a window body 2 is used. In the present embodiment, the one plate member 10a of one laminate L1 and the other plate member 10b of the other laminate L2 are arranged so as to face each other.

In such a window body 2, in the one plate member 10a of the other laminate L2, the hydraulic fluid HF evaporates at a temperature of 21°C or higher, for example, and the heat of condensation is discarded from the other plate member 10b side. This heat is stored by the latent heat storage member 60. When the temperature of the other plate member 10b side of the one laminate L1 becomes less than 21°C, due to the heat stored in the latent heat storage member 60, the hydraulic fluid HF evaporates in the reservoir Res on the one laminate L1 side, and the heat of condensation is discarded from the other plate member 10b side. As a result, the heat of the other laminate L2 flows through to the one laminate L1 side via the latent heat storage member 60 serving as a buffer. Accordingly, for example, in summer, the indoor side becomes the other laminate L2, and the room can be made comfortable by the cooling effect without taking in moisture.

In particular, in the window body 2 according to the second embodiment, if the room temperature is, for example, 21°C or higher even when the outside air temperature is higher, the latent heat storage member 60 can be used to obtain the cooling effect. That is, since the latent heat storage member 60 is fixed at 21°C, if the room temperature is 21°C or higher, the heat in the room can be transferred to the latent heat storage member 60, and the indoor cooling effect can be obtained. The heat stored in the latent heat storage member 60 will be discarded when the outside air temperature becomes 21°C or less, for example, in the nighttime. Therefore, the window body 2 is provided with the latent heat storage member 60 as a buffer, and therefore it is possible to increase the frequency of making the room comfortable.

The window body 2 according to the second embodiment includes the pivot 40 as illustrated in Figs. 3 and 4, and it is possible to perform a reversing operation in the right-left direction by switching the relative positions of the one laminate L1 and the other laminate L2 while maintaining the vertical positions.

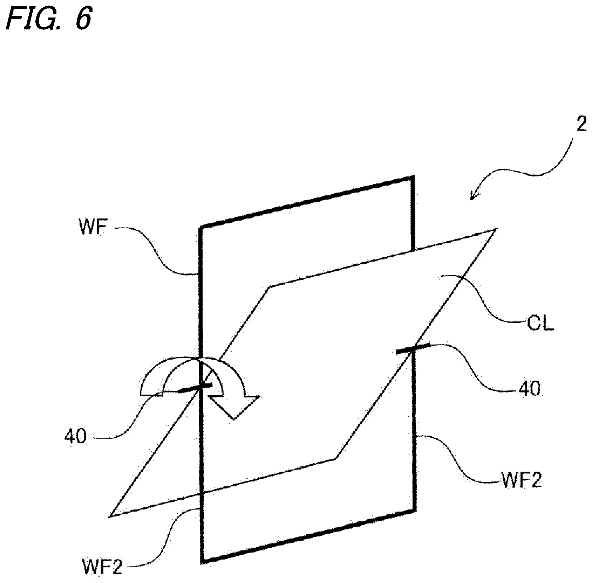

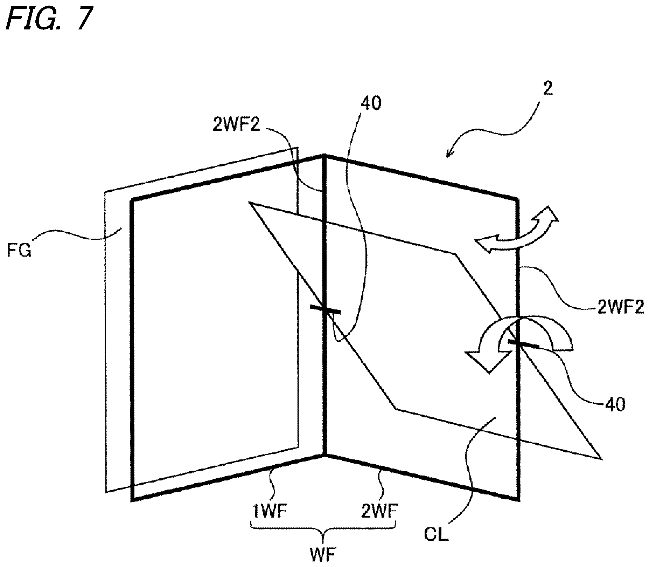

The window body 2 according to the second embodiment can also perform the reversing operation as illustrated in Figs. 6 and 7. Fig. 6 is a perspective view illustrating a reversal structure according to a second modification example. As illustrated in Fig. 6, the pivots 40 are rotatably provided at the central portions of the left and right members WF2 of the rectangular window frame WF. The pivot 40 is connected to the center of the right and left sides of a composite laminate CL having the two laminates L and the latent heat storage member 60. Therefore, the composite laminate CL can be reversed vertically around the pivot 40, and at the time of reversing, it is possible to reverse the composite laminate CL vertically by switching the relative positions of the one plate member 10a and the other plate member 10b while maintaining the right and left positions of the composite laminate CL.

As illustrated in Fig. 2, since the shape of the lower plate 31 and the upper plate 32 of the slope 30 is a point-symmetrical structure with the connecting plate 33 interposed therebetween, even when the composite laminate CL is reversed vertically, the slope 30 forms the reservoir Res. That is, when reversed vertically, the reservoir Res is formed by the upper plate 32 and the other plate member 10b.

Fig. 7 is a perspective view illustrating a reversal structure according to a third modification example. As illustrated in Fig. 7, the window body 2 according to the third modification example further includes the fixed glass FG on the outdoor side, in addition to the pivot 40, and can be reversed without the laminate L coming into contact with the fixed glass FG.

In the third modification example, the window frame WF includes a first window frame 1WF fixedly arranged and a second window frame 2WF that can be opened and closed like a door with respect to the first window frame 1WF. The pivots 40 are rotatably provided at the central portions of the right and left members 2WF2 of the rectangular second window frame 2WF. Therefore, the reversing operation can be performed as follows. First, the first window frame 1WF is rotated so as to open the second window frame 2WF. Here, the second window frame 2WF is opened about 90 degrees. Then, the composite laminate CL is vertically reversed around the pivot 40 while maintaining the right and left positions. After being reversed, the composite laminate CL is locked to the second window frame 2WF by a predetermined means. Thereafter, the second window frame 2WF is rotated to be closed with respect to the first window frame 1WF. The closed second window frame 2WF is locked to the first window frame 1WF by a predetermined means.

As described above, even the window body 2 having the fixed glass FG on the outdoor side can be reversed vertically.

Here, the latent heat storage member 60 tends to generate a precipitate by repeating solidification and melting, resulting in a decrease in the amount of heat storage. However, as illustrated in Figs. 6 and 7, since the pivot 40 that is reversed vertically is provided, the precipitate can be crushed when reversed vertically, and the amount of heat storage can be recovered.

Next, the operation of the window body 2 according to the second embodiment will be described. First, as illustrated in Fig. 5, it is assumed that one plate member 10a of the other laminate L2 is the indoor side and the other plate member 10b of the one laminate L1 is the outdoor side.

Here, for example, when the room temperature becomes 21°C or higher, the hydraulic fluid HF in the reservoir Res evaporates. The evaporated hydraulic fluid HF reaches the other plate member 10b on the outdoor side and is liquefied, and flows down on the inner surface of the other plate member 10b. The hydraulic fluid HF that has flowed down returns to the reservoir Res again via the upper plate 32 of the slope 30. Here, the one plate member 10a is cooled by the heat of evaporation due to the evaporation of the hydraulic fluid HF, and the heat of condensation of the hydraulic fluid HF is discarded from the other plate member 10b. The discarded heat is stored by the latent heat storage member 60. Therefore, the heat of the indoor side can be transferred to the latent heat storage member 60, and the cooling effect of cooling the room can be obtained.

Regarding the one laminate L1, when the outside air temperature becomes 21°C or less, the hydraulic fluid HF repeats evaporation and condensation in the same manner as above, and the heat stored in the latent heat storage member 60 is discarded to the outside air.

When the pivot 40 is used as illustrated in Fig. 3 or Fig. 4, the relative positions are switched by reversing in the right-left direction while maintaining the vertical positions of the one laminate L1 and the other laminate L2, the operation is reverse to the above, and the heating effect can be obtained in winter and the like.

As illustrated in Figs. 6 and 7, when the pivot 40 is used to switch the relative positions by reversing vertically while maintaining the right and left positions of the one laminate L1 and the other laminate L2, there is an effect of crushing the precipitate of the latent heat storage member 60 and recovers the amount of heat storage.

Thus, according to the window body 2 according to the second embodiment, similar to the first embodiment, the outdoor air temperature can be used without requiring electric energy and without allowing moisture to flow in and out. If the latent heat storage member 60 is transparent, the latent heat storage member 60 can be applied to a window.

According to the second embodiment, in the space between the two laminates L, since the latent heat storage member 60 having a melting point and a freezing point in a specific temperature range is provided, for example, even when the outside temperature is higher than the room temperature, when the room temperature is equal to or higher than the specific temperature range, the heat in the room can be transferred to the latent heat storage member 60, and the heat of the latent heat storage member 60 can be released to the outside when the outside of the room becomes cooler than the specific temperature range such as in the nighttime. Therefore, by having the latent heat storage member 60 as a buffer, it is possible to increase the frequency of making the room comfortable.

Among a plurality of laminates L, since the pivot 40 capable of reversing operation for switching the relative positions of one on the one side and the other on the other side in the laminating direction is provided, when reversing in the right-left direction while maintaining the vertical positions, the relative position of the laminate L can be switched to select cooling and heating when it is desired to change the direction of heat transmission, such as in summer and winter, daytime and nighttime. When vertically reversed while maintaining the right and left positions, the vertical position of the latent heat storage member 60 is reversed, and it is possible to suppress the reduction of a heat storage effect due to the precipitation of a specific component.

Next, a third embodiment according to the present invention will be described. The window body according to the third embodiment is similar to that of the first embodiment, but part of the configuration is different. Hereinafter, differences from the first embodiment will be described.

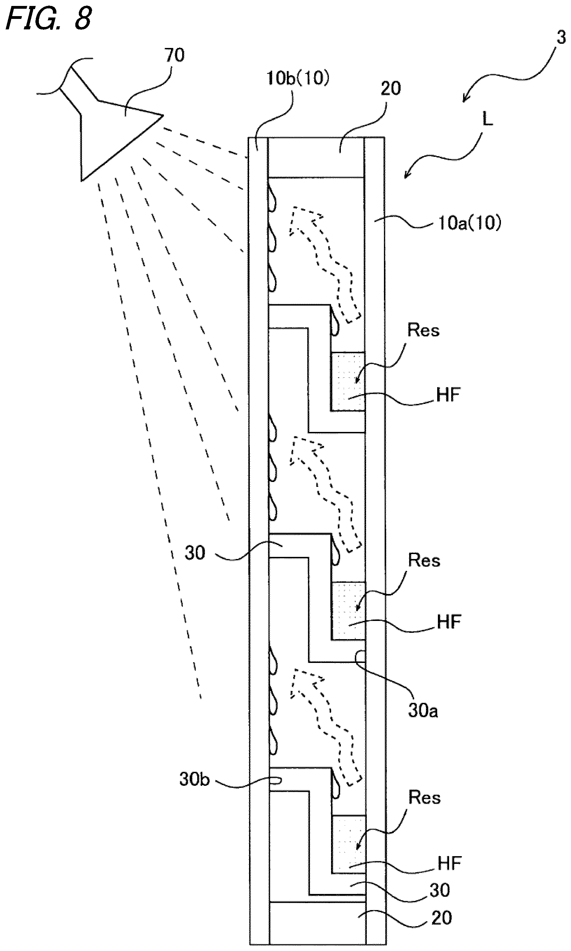

Fig. 8 is a configuration view illustrating a window body according to the third embodiment. A window body (composite structure body) 3 illustrated in Fig. 8 further includes a spraying portion (spraying means) 70 for spraying liquid (water) in a mist form onto the laminate L from the upper side on the outdoor side of the laminate L. When the other plate member 10b is the outdoor side, the spraying portion 70 sprays water onto the other plate member 10b in a mist form to provide a cooling effect on the indoor side.

Here, when the other plate member 10b is the outdoor side, spraying mist from the outdoor side has the effect of lowering the other plate member 10b close to the dew point even when the outside air temperature is high. As a result, a state similar to that when the outside air temperature becomes low can be artificially created, and a cooling effect can be provided on the indoor side.

The case where the other plate member 10b is the outdoor side may be, for example, a case where the other plate member 10b is fixedly installed so as to be the outdoor side, or may be the timing when the other plate member 10b is the outdoor side by utilizing the above-described reversing mechanism.

Thus, according to a window body 3 according to the third embodiment, similar to the first embodiment, the outdoor air temperature can be used without requiring electric energy and without allowing moisture to flow in and out. If each portion is transparent, the window body can be applied to windows.

According to the third embodiment, since the spraying portion 70 is provided on the outdoor side, by spraying the liquid in a mist form when the other plate member 10b is the outdoor side, even when the outdoor temperature is high, a cooling effect can be provided on the indoor side.

Next, a fourth embodiment according to the present invention will be described. The window body according to the fourth embodiment is similar to that of the first embodiment, but part of the configuration is different. Hereinafter, differences from the first embodiment will be described.

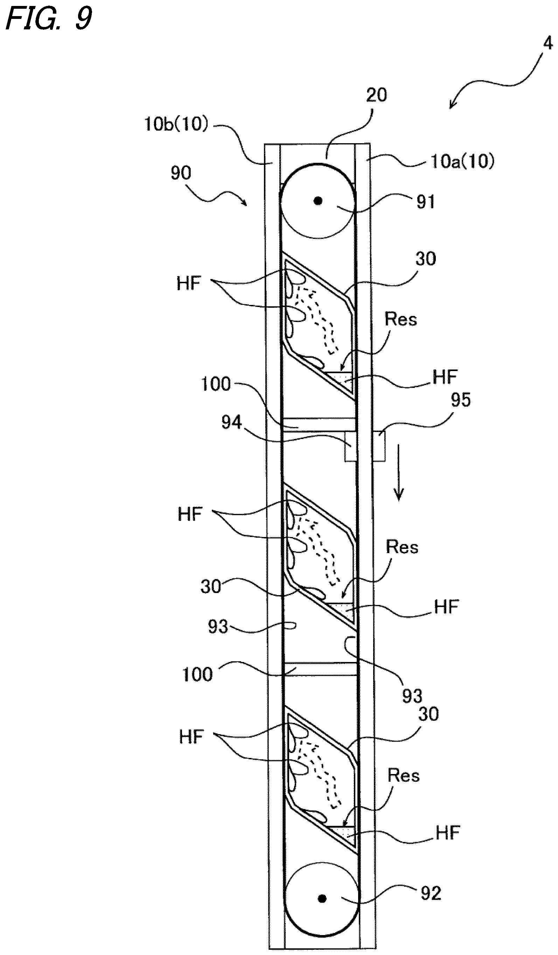

Fig. 9 is a configuration view illustrating a window body according to the fourth embodiment. As illustrated in Fig. 9, a window body 4 according to the fourth embodiment roughly includes two sheets of plate members 10, the vacuum sealing member 20, the slope 30, and the hydraulic fluid (liquid) HF, as in the first embodiment, but the structure of the slope 30 is different from that of the first embodiment. The window body 4 according to the fourth embodiment does not include a reversing mechanism such as the pivot 40, but includes an operating mechanism 90 that operates the slope 30 instead. The details will be described below.

As illustrated in Fig. 9, the slope 30 according to the fourth embodiment is a hollow substantially rhombic member (substantially rhombic cylinder) when viewed in cross-section. The inside of the substantially rhombic slope 30 is filled with the hydraulic fluid HF.

The operating mechanism 90 operates the slope 30 according to the fourth embodiment and includes an upper pulley 91, a lower pulley 92, a ladder cord 93, an inner magnet 94, and an outer magnet 95. The upper pulley 91 and the lower pulley 92 are pulley members provided on the upper side and the lower side of the window body 4, respectively. The ladder cord 93 is an endless cord member wound around the upper pulley 91 and the lower pulley 92. The ladder cord 93 is connected to both sides of the slope 30 (both a first plate member 10a side and a second plate member 10b side). The connection is made by an appropriate means.

The inner magnet 94 is a magnet member disposed in an internal space formed by the two sheets of plate members 10 and the vacuum sealing member 20, and is connected to the ladder cord 93. The outer magnet 95 attracts the inner magnet 94 via the one plate member 10a. The inner magnet 94 and the outer magnet 95 are composed of strong magnets such as neodymium magnets.

The window body 4 illustrated in Fig. 9 also includes a pillar 100 between two sheets of plate members 10 for withstanding an external pressure.

Here, in the state illustrated in Fig. 9, the slope 30 has a rhombic upper portion inclined toward the other plate member 10b (outdoor side). As a result, as illustrated in Fig. 9, the slope 30 is in an inclined state of descending from the other plate member 10b side to the one plate member 10a side and forms the reservoir Res on the one plate member 10a side. This state is called a first state.

In the first state, the slope 30 is such that one of the lower sides of the rhombic shape contacts the one plate member 10a and one of the upper sides of the rhombic shape contacts the other plate member 10b, and therefore it is easy to conduct heat to the two sheets of plate members 10 without being blocked by the vacuum layer. Therefore, the hydraulic fluid HF in the reservoir Res can be evaporated by the heat of the one plate member 10a side, and at the time of evaporation, the hydraulic fluid HF reaches the other plate member 10b side and is condensed, and then returns to the reservoir Res again.

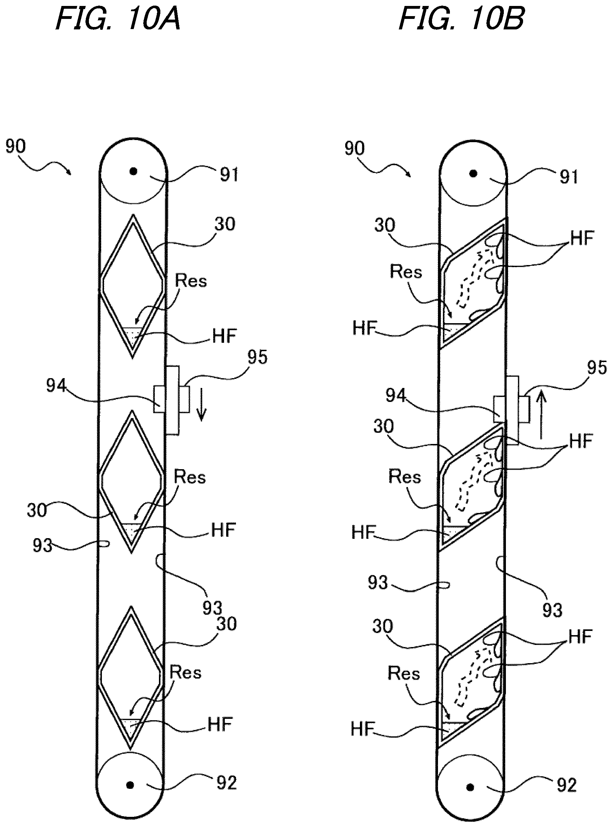

Figs. 10A and 10B are operation views illustrating how the operating mechanism 90 illustrated in Fig. 9 operates, Fig. 10A illustrates a neutral state, and Fig. 10B illustrates a second state. As described with reference to Fig. 9, the outer magnet 95 attracts the inner magnet 94 connected to the ladder cord 93. Therefore, when a user operates the outer magnet 95, the ladder cord 93 can be moved. Since the ladder cord 93 is connected to both sides of the slope 30, the slope 30 can be rotated from the state illustrated in Fig. 9.

As a result, the neutral state illustrated in Fig. 10A can be obtained. In the neutral state, the slope 30 is in a state where the upper and lower sides of the substantially rhombic shape are separated from the two sheets of plate members 10, and the reservoir Res is formed at the center side of the two sheets of plate members 10. Therefore, the hydraulic fluid HF is not evaporated by the heat from the outside of the two sheets of plate members 10. As a result, the window body 4 according to the fourth embodiment is used as a heat-insulating window.

By rotating the slope 30 from the state illustrated in Fig. 9, the second state illustrated in Fig. 10B can be obtained. In the second state, the slope 30 is such that one of the upper sides of the rhombic shape contacts the one plate member 10a and one of the lower sides of the rhombic shape contacts the other plate member 10b, and therefore it is easy to conduct heat to the two sheets of plate members 10 without being blocked by the vacuum layer. Therefore, the hydraulic fluid HF in the reservoir Res can be evaporated by the heat of the other plate member 10b side, and at the time of evaporation, the hydraulic fluid HF reaches the one plate member 10a side and is condensed, and then returns to the reservoir Res again.

The operation of the window body 4 according to the fourth embodiment is similar to that of the first embodiment. That is, when the slope 30 is in the first state, heat can be transmitted from the indoor side to the outdoor side in the same manner as in the case illustrated in Fig. 1. When the slope 30 is in the second state, heat can be transmitted from the outdoor side to the indoor side. In the window body 4 according to the fourth embodiment, when the slope 30 is in the neutral state, it is possible to exhibit a heat-insulating effect without causing heat transmission.

In the fourth embodiment, the slope 30 can be switched between the first state, the neutral state, and the second state, but the present invention is not limited thereto, and the slope 30 may be switchable between any two of the above three states.

Thus, according to a window body 4 according to the fourth embodiment, similar to the first embodiment, the outdoor air temperature can be used without requiring electric energy and without allowing moisture to flow in and out. If the latent heat storage member 60 is transparent, the latent heat storage member 60 can be applied to a window.

According to the fourth embodiment, the slope 30 is switchable between at least two of the first state, the neutral state, and the second state, when it is desired to change the direction of heat transmission, such as in summer and winter, daytime and nighttime, or to obtain a heat-insulating effect, by controlling the state of the slope 30, at least two of the cooling effect, the heating effect, and the heat insulating effect can be appropriately obtained.

The spraying portion 70 may be provided in the fourth embodiment as in the third embodiment. Here, in the third embodiment, since the one plate member 10a side is always the cooling side and the other plate member 10b side is the heating side, the spraying portion 70 sprays the liquid (water) in a mist form onto the other plate member 10b side. However, in the fourth embodiment, since the cooling side and the heating side of the two sheets of plate members 10 are switched, it is preferable to provide a plurality of spraying portions 70 capable of spraying liquid (water) in a mist form on both surfaces of the two sheets of plate members 10.

The window body 4 according to the fourth embodiment is assumed to have a configuration in which the window body 4 is not reversed, but the configuration is not limited thereto, and the window body 4 may be configured to be reversible.

Next, a fifth embodiment according to the present invention will be described. The window body according to the fifth embodiment is similar to that of the second embodiment, but part of the configuration is different. Hereinafter, differences from the second embodiment will be described.

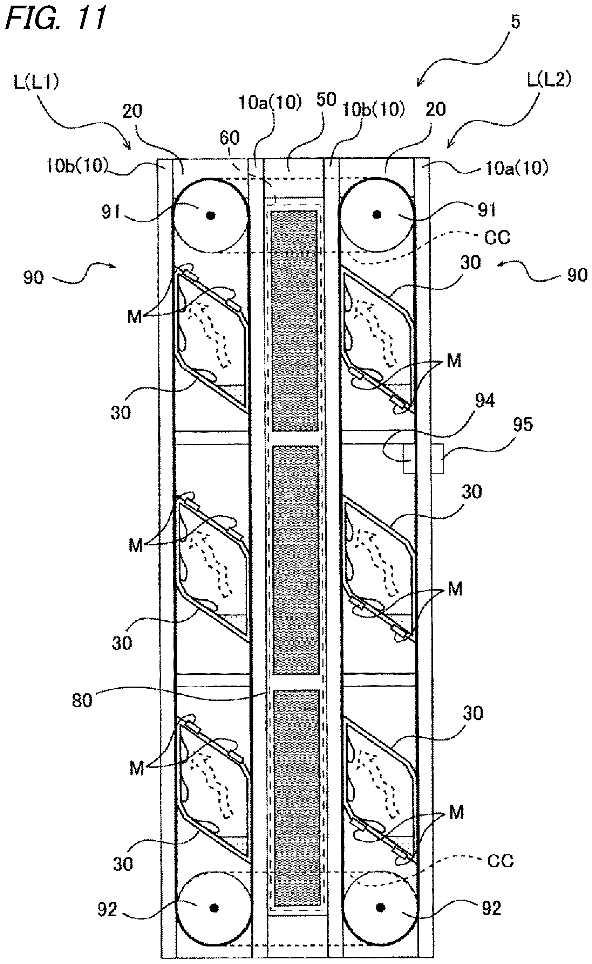

Fig. 11 is a configuration view illustrating a window body according to the fifth embodiment. As illustrated in Fig. 11, a window body 5 according to the fifth embodiment is similar to that of the second embodiment, and includes two laminates L (one example of a plurality) including the window body 4 illustrated in the fourth embodiment, and a ladder-shaped cross-section member 80 having the sealing member 50 between the two laminates L and the transparent latent heat storage member 60 in a space sandwiched therebetween. It is assumed that the window body 5 according to the fifth embodiment is not reversed, but the window body 5 is not limited thereto and may be configured to be reversible (reversible vertically and in the right-left direction).

The inner magnet 94 and the outer magnet 95 are provided only in the other laminate L2, and in the one laminate L1 and the other laminate L2, the upper pulleys 91 and the lower pulleys 92 are connected by a connecting cord CC, and the upper pulleys 91 and the lower pulleys 92 are rotatable in synchronization. Therefore, by operating the outer magnet 95 provided on the other laminate L2, the slopes 30 of the respective laminates L1 and L2 can be switched between the first state, the neutral state, and the second state.

Each slope 30 according to the fifth embodiment includes a magnet (magnetic material) M. The slope 30 of the one laminate L1 is provided with the magnet M on the side of the lower side of the rhombic shape on the latent heat storage member 60 side. The slope 30 of the other laminate L2 includes the magnet M on the side of the upper side of the rhombic shape on the latent heat storage member 60 side.

In the fifth embodiment, the latent heat storage member 60 has a magnetically dispersed component as a freezing point depressant. As the freezing point depressant here, for example, a water-soluble magnetic ionic liquid with tetrachlorodisprosate as an anion, 1-Butyl-3-methylimidazolium tetrachlorodisprosate described in JP-A-2007-131608 is used. It is considered that such a water-soluble ionic liquid disperses as ionized ions in water while keeping anions (DyCl₄⁻) and cations (BMIM⁺) in the vicinity of each other, but for convenience, magnetic DyCl₄⁻ will be described below.

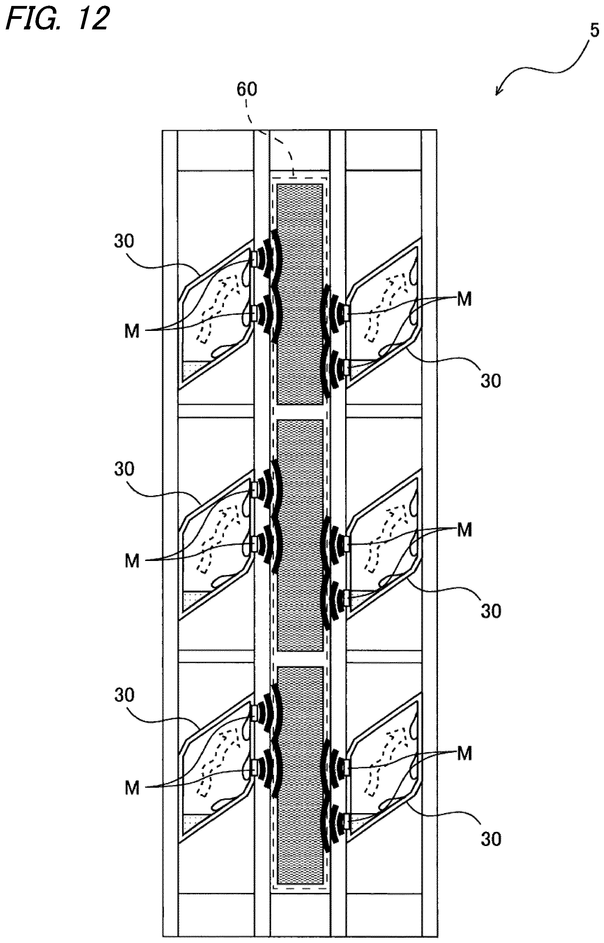

Fig. 12 is an operation view illustrating an operation state by the operating mechanism 90 illustrated in Fig. 11, and illustrates a case where the slope 30 is in the second state. As described with reference to Fig. 11, the slope 30 of each laminate L can be switched between the first state, the neutral state, and the second state.

In particular, when the slope 30 is in the second state, the magnet M is close to the latent heat storage member 60 and adsorbs the magnetic component of the latent heat storage member 60. That is, the dysprosium tetrachloride ion (DyCl₄⁻) is attracted to the magnet M and concentrated in the vicinity of the magnet M. As a result, the concentration of the freezing point depressant becomes low in the portion excluding the vicinity of the magnet M. Therefore, the freezing point of the latent heat storage member 60 can be raised to, for example, about 26°C, and the window body 5 can be made to function for winter.

On the other hand, although illustration is omitted, when the slope 30 is in the first state, the magnet M is separated from the latent heat storage member 60 and does not adsorb a magnetic component. Therefore, the dysprosium tetrachloride ions (DyCl₄⁻) are dispersed in the latent heat storage member 60. As a result, the freezing point depressant is allowed to act normally, the freezing point of the latent heat storage member 60 can be lowered to, for example, about 18°C, and the window body 5 can be made to function for summer.

Next, the operation of the window body 5 according to the fifth embodiment will be described. The window body 5 according to the fifth embodiment is similar to that of the second embodiment. That is, when the slope 30 is in the first state, heat can be transmitted from the indoor side to the outdoor side in the same manner as in the case illustrated in Fig. 5. When the slope 30 is in the second state, heat can be transmitted from the outdoor side to the indoor side.

In the window body 5 according to the fifth embodiment, the latent heat storage member 60 can function as a buffer, as in the second embodiment, and for example, in the state illustrated in Fig. 11, even if the outside air temperature is higher, if the room temperature is equal to or higher than the temperature of the latent heat storage member 60, a cooling effect can be obtained by using the latent heat storage member 60. Similarly, in the state illustrated in Fig. 12, even if the outside air temperature is lower, if the room temperature is lower than the temperature of the latent heat storage member 60, for example, a heating effect can be obtained by using the latent heat storage member 60.

When the slope 30 is in the second state, the dysprosium tetrachloride ion (DyCl₄⁻) is attracted to the magnet M, and the concentration of the freezing point depressant is reduced in the portion except for the vicinity of the magnet M. Therefore, the freezing point of the latent heat storage member 60 is raised to about 26°C, for example. On the other hand, when the slope 30 is in the first state, the dysprosium tetrachloride ion (DyCl₄⁻) is not attracted to the magnet M and the freezing point depressant acts normally. Therefore, the freezing point of the latent heat storage member 60 is lowered to about 18°C, for example.

Although the slope 30 is switched between the first state, the neutral state, and the second state in the fifth embodiment, the present invention is not limited thereto, and the slope 30 may be switched between the first state and the second state.

Thus, according to a window body 5 according to the fifth embodiment, similar to the second embodiment, the outdoor air temperature can be used without requiring electric energy and without allowing moisture to flow in and out. If the latent heat storage member 60 is transparent, the latent heat storage member 60 can be applied to a window. By having the latent heat storage member 60 as a buffer, it is possible to increase the frequency of making the room comfortable. As in the fourth embodiment, the state of the slope 30 can be controlled to appropriately obtain at least two among the cooling effect, the heating effect, and the heat-insulating effect.

According to the fifth embodiment, the magnet M is close to the latent heat storage member 60 in the second state and adsorbs the magnetic component of the latent heat storage member 60, and is separated from the latent heat storage member 60 in the first state and disperses the component in the latent heat storage member 60 without adsorbing the magnetic component. Therefore, the melting point and the freezing point of the latent heat storage member 60 can be changed by adjusting the components depending on whether the component is adsorbed on the magnet M or not. Thereby, for example, in summer, the melting point and the freezing point of the latent heat storage member 60 can be lowered to be suitable for summer, and in winter, the melting point and the freezing point of the latent heat storage member 60 can be increased to be suitable for winter.

Next, a sixth embodiment according to the present invention will be described. The window body according to the sixth embodiment is similar to that of the fourth embodiment, but part of the configuration is different. Hereinafter, differences from the fourth embodiment will be described.

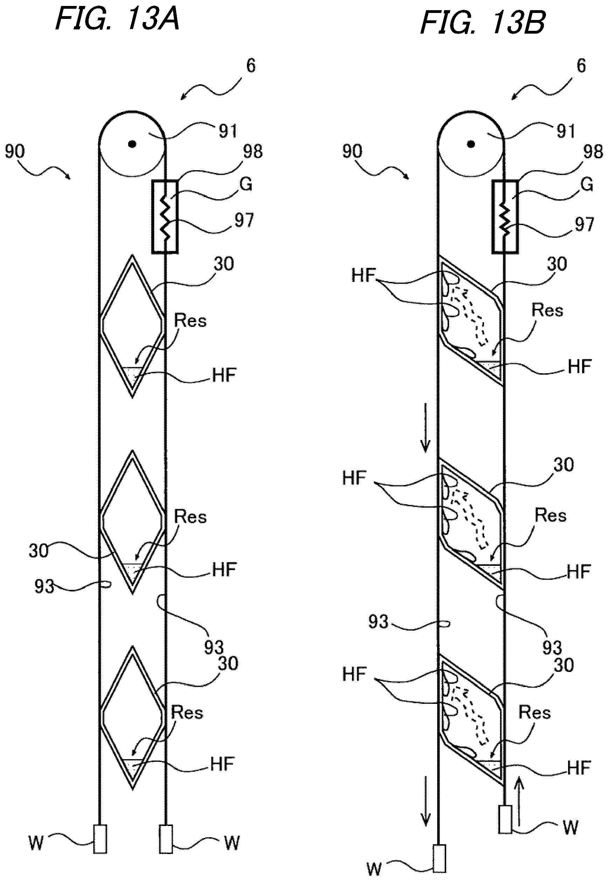

Figs. 13A and 13B are configuration views illustrating a part of a window body according to the sixth embodiment, Fig. 13A illustrates the slope 30 in the neutral state, and Fig. 13B illustrates the slope 30 in the first state. In Figs. 13A and 13B, for convenience of description, the illustration of a part of the configuration is omitted. In the window body 6 illustrated in Figs. 13A and 13B, the operating mechanism 90 does not operate by a user operation, but the operating mechanism 90 operates according to a change in ambient temperature.

Specifically, the operating mechanism 90 according to the sixth embodiment includes a weight W, a shape memory spring 97, a grease case 98, and a heat transfer grease G in addition to the upper pulley 91 and the ladder cord (cord member) 93 and does not include the lower pulley 92 and the magnets 94 and 95 are not provided.

In the sixth embodiment, the ladder cord 93 is wound around the upper pulley 91, and the weight W serving as a weight is attached to both ends of the ladder cord 93 located on the lower side. The ladder cord 93 is attached to each slope 30 as in the fourth embodiment.

The shape memory spring 97 is a member that can expand and contract according to room temperature (ambient temperature) described later. The shape memory spring 97 is interposed between the ladder cords 93 and housed in the grease case 98. The inside of the grease case 98 is filled with the heat transfer grease G. Although not illustrated, the grease case 98 is provided in contact with the one plate member 10a.

Next, the operation of the window body 6 will be described in the sixth embodiment. First, it is assumed that the room temperature is medium. Here, as illustrated in Fig. 13A, the shape memory spring 97 is in an intermediate state that is neither a tensioned state nor a relaxed state. That is, medium room temperature is transmitted to the shape memory spring 97 via the first plate member 10a, the grease case 98, and the heat transfer grease G, and therefore the shape memory spring 97 is in an intermediate state that is neither a tensioned state nor a relaxed state. Here, the slope 30 is separated from the two sheets of plate members 10 without the upper and lower sides of the rhombic shape contacting the two sheets of plate members 10. That is, the window body 6 functions as a heat-insulating window when the room temperature is at a medium temperature and in a comfortable temperature range.

When the room temperature is high, the shape memory spring 97 is in a tensioned state as shown in Fig. 13B. That is, the higher room temperature is transmitted to the shape memory spring 97 via the first plate member 10a, the grease case 98, and the heat transfer grease G, and therefore the shape memory spring 97 is in a tensioned state. Here, the ladder code 93 operates and the slope 30 is switched to the first state. Therefore, heat is transmitted from one plate member 10a side to the other plate member 10b side, and a cooling effect for cooling the room can be provided.

Although illustration is omitted, when the room temperature is low, the shape memory spring 97 is in a relaxed state. Here, the ladder code 93 operates and the slope 30 is switched to the second state. Therefore, heat is transmitted from the other plate member 10b side to the one plate member 10a side, and a heating effect of heating the room can be provided. Such a shape memory alloy spring in three states of a relaxed state, an intermediate state, and a tensioned state can be realized by connecting springs having different shape recovery temperatures in series.

The slope 30 according to the sixth embodiment is also switchable between the first state, the neutral state, and the second state, but is not limited thereto, and the slope 30 may be switchable between any two of the above three states.

Thus, according to a window body 6 according to the sixth embodiment, similar to the fourth embodiment, the outdoor air temperature can be used without requiring electric energy and without allowing moisture to flow in and out. If the latent heat storage member 60 is transparent, the latent heat storage member 60 can be applied to a window. The state of the slope 30 can be controlled to appropriately obtain at least two among the cooling effect, the heating effect, and the heat-insulating effect.

According to the sixth embodiment, the ladder cord 93 operates by the expansion and contraction of the shape memory spring 97 according to the change in ambient temperature, and the slopes 30 are switched, and therefore it is possible to make settings according to the indoor environment by selecting the heating and cooling, and the like each time without user operation.

It goes without saying that the operating mechanism 90 according to the sixth embodiment is applicable not only to the fourth embodiment but also to the fifth embodiment.

Although the present invention has been described above based on the embodiments, the present invention is not limited to the above embodiments, and modifications may be made without departing from the spirit of the present invention, and the techniques of the embodiments may be appropriately combined within the possible range. Known or well-known techniques may be combined to the extent possible.

For example, in the present embodiment, the two sheets of plate members 10, the hydraulic fluid HF, the slope 30, and the latent heat storage member 60 and the like have been described to be transparent, but the transparency is not limited to being colorless and transparent and may be colored transparency.

In the second embodiment, a structure in which two laminates L are stacked is provided, but the present invention is not limited to the two laminates L, three or more laminates L may be stacked and the latent heat storage member 60 may be disposed therebetween, one laminate L and one latent heat storage member 60 may be laminated and disposed, or one laminate L may be sandwiched between two latent heat storage members 60.

In the second embodiment, for example, by combining the reversal structures illustrated in Figs. 4 and 7, the structure may be capable of being reversed both vertically and in the right-left direction.

In the third embodiment, the mist is sprayed onto the laminate L, but the present invention is not limited thereto, and the mist may be sprayed onto the window body 2 illustrated in Fig. 5. In winter when the other plate member 10b is the indoor side, mist may be sprayed from the indoor side onto the laminate L, and the outdoor temperature may be used while also humidifying the room.

In the second embodiment, a ladder-shaped cross-section member 80 and the like for holding the latent heat storage member 60 is provided, but a structure in which the latent heat storage member 60 is simply filled in the space sandwiched between the two laminates L and the sealing member 50 may be used. Here, one plate member 10a of the one laminate L1 and the other plate member 10b of the other laminate L2 also have a function as a holding plate member for holding the latent heat storage member 60.

In the fifth embodiment, the magnet M is close to the latent heat storage member 60 in the second state, but the present invention is not limited thereto, and the magnet M may be close to the latent heat storage member 60 in the first state. In the fifth embodiment, as an example of a magnetic component, dysprosium tetrachloride (DyCl₄⁻) is attracted to the magnet M as a freezing point depressant, but is not particularly limited to the freezing point depressant, and if possible, the component of the latent heat storage member 60 may be attracted to the magnet M.

In the above, the component (magnetic component) of the latent heat storage member 60 may be not only a component that generates latent heat or a melting point/freezing point adjusting agent but also a dispersant or a nucleating agent.

Although various embodiments have been described above with reference to the drawings, it goes without saying that the present invention is not limited to such examples. It is obvious to those skilled in the art that various changes or modifications can be conceived within the scope of the claims, and it is understood that those changes and modifications naturally belong to the technical scope of the present invention. The constituent elements in the above-described embodiments may be arbitrarily combined without departing from the spirit of the invention.

The present application is based on a Japanese patent application filed on December 26, 2017 (Japanese Patent Application No. 2017-248814), the contents of which are incorporated by reference into the present application.

### REFERENCE SIGNS LIST

- 1, 3, 4, 6:: window body (structure body)
- 2, 5:: window body (composite structure body)
- 10:: two sheets of plate members
- 10a:: one plate member
- 10b:: the other plate member
- 30:: slope
- 40:: pivot (reversing mechanism)
- 60:: latent heat storage member
- 70:: spraying portion (spraying means)
- 80:: ladder-shaped cross-section member (holding plate member)
- 93:: ladder code (cord member)
- 97:: shape memory spring
- CL:: composite laminate
- HF:: hydraulic fluid (liquid)
- L, L1, L2:: laminate
- M:: magnet (magnetic material)
- Res:: reservoir

## Claims

1. A structure comprising:
two sheets of plate members that form a space sandwiched between both;
a liquid that is enclosed between the two sheets of plate members; and
a slope having a liquid circulation structure in which a reservoir of the liquid is formed on one plate member side of the two sheets of plate members, the liquid in the reservoir evaporated by heat of the one plate member side reaches the other plate member side, and the liquid condensed on the other plate member side returns to the reservoir again.

2. The structure body according to claim 1, wherein
the two sheets of plate members, the liquid, and the slope are made of transparent materials.

3. The structure body according to claim 1 or 2, further comprising a spraying portion for spraying water in a mist form on the other plate member.

4. The structure body according to any one of claims 1 to 3, wherein
a reversing mechanism capable of reversing operation for switching relative positions of the one plate member and the other plate member while maintaining vertical positions thereof is provided.

5. A composite structure body comprising:
one or a plurality of the structure body according to any one of claims 1 to 3; and
a holding plate member that holds a latent heat storage member having a melting point and a freezing point in a specific temperature range, wherein
the structure body is laminated and disposed on the holding plate member.

6. The composite structure body according to claim 5, further comprising:
a reversing mechanism capable of reversing operation of at least one of reversing in a right-left direction and reversing vertically is provided for switching relative positions of one on the one side and the other on the other side in a laminating direction among the plurality of the structures arranged to face each other.

7. The structure body according to any one of claims 1 to 3, wherein
the slope is switchable in at least two of three states of a first state in which a reservoir of the liquid is formed on one plate member side of the two sheets of plate members, the liquid in the reservoir evaporated by heat of the one plate member side reaches the other plate member side, and the liquid condensed on the other plate member side returns to the reservoir again, a second state in which the reservoir of the liquid is formed on the other plate member side of the two sheets of plate members, the liquid in the reservoir evaporated by heat of the other plate member side reaches the one plate member side, and the liquid condensed on the one plate member side returns to the reservoir again, and a neutral state in which the reservoir is formed at a center side of the two sheets of plate members, and the liquid in the reservoir does not evaporate.

8. The structure body according to claim 7, further comprising:
a shape memory spring that is expandable and contractible according to ambient temperature, and a cord member that is connected to the shape memory spring and attached to the slope, wherein
the cord member operates by expansion and contraction of the shape memory spring according to a change in the ambient temperature, and the slope is switched by the at least two states.

9. A composite structure body comprising:
one or a plurality of the structure body according to claim 7 or 8,
a holding plate member that holds a latent heat storage member having a melting point and a freezing point in a specific temperature range, wherein
the structure body is laminated and disposed on the holding plate member.

10. The composite structure body according to claim 9, further comprising:
a magnetic material that is attached to the slope, wherein
the slope is switchable at least in the first state and the second state,
the latent heat storage member has a magnetic component to disperse, and
the magnetic material adsorbs the component of the latent heat storage member close to the latent heat storage member in either one of the first state and the second state, is separated from the latent heat storage member in the other one of the first state and the second state, and is dispersed in the latent heat storage member without adsorbing the component.
